# EUROPEAN PATENT SPECIFICATION

(11) **EP 2 738 997 B1**
(45) Date of publication and mention of the grant of the patent: **06.04.2016**
(21) Application number: 12827930.4
(22) Date of filing: 11.04.2012
(51) Int. Cl.: H04L 29/06

(54) **METHOD AND DEVICE FOR MANAGING MAC ADDRESS TABLE ENTRIES IN TRILL NETWORK**
VERFAHREN UND VORRICHTUNG ZUR VERWALTUNG VON MAC-ADRESSENTABELLENEINTRAGUNGEN IN TRILL-NETZWERK
PROCÉDÉ ET DISPOSITIF DE GESTION D'ENTRÉES DE TABLE D'ADRESSES MAC DANS UN RÉSEAU TRILL

(30) Priority: 26.08.2011 CN 201110249205
(43) Date of publication of application: 04.06.2014
(73) Proprietor: Huawei Technologies Co., Ltd., Longgang District Shenzhen, Guangdong 518129 (CN)
(72) Inventor: XU, Xiaohu, Shenzhen Guangdong 518129 (CN); ZHANG, Mingui, Shenzhen Guangdong 518129 (CN)
(74) Representative: Gill Jennings & Every LLP
(86) International application number: PCT/CN2012/073773
(87) International publication number: WO 2013/029374

(56) References cited:
- WO-A1-2010/141064
- CN-A- 101 110 747
- CN-A- 101 656 671
- CN-A- 101 827 009
- US-A1- 2008 031 154

## Description

### CROSS-REFERENCE TO RELATED APPLICATION

This application claims priority to Chinese Patent Application No. 201110249205.X, filed with the Chinese Patent Office on August 26, 2011, and entitled "METHOD AND DEVICE FOR MANAGING MAC ADDRESS ENTRY IN TRILL NETWORK", which is incorporated herein by reference in its entirety.

### TECHNICAL FIELD

The present invention relates to the field of communications technologies, and in particular, to a method and a device for managing a media access control (Media Access Control, MAC) address entry in a Transparent Interconnection of Lots of Links (Transparent Interconnection of Lots of Links, TRILL) network.

### BACKGROUND

The Ethernet adopts a Spanning Tree Protocol STP (Spanning Tree Protocol, STP) on a data forwarding layer. The STP is a data link layer (a second layer) communication protocol based on an open system interconnect reference model (OSI, Open System Interconnect Reference Model). The STP can be applied in a loop network. By using a certain algorithm to implement path redundancy, the STP trims the loop network as a loop-free tree network, thereby avoiding proliferation and endless cycling of a packet in the loop network, and solving a "broadcast storm" problem in a loop Ethernet network. In a sense, the STP is a network protection technique that can eliminate a cycling connection caused by a mistake or an accident. However, the STP has the following obvious disadvantages: (1) the STP prevents a loop by blocking some ports and does not allow multipath routing (multipath routing), so all traffic is transmitted on one tree, and even if an idle link exists, the idle link cannot be used, leading to bandwidth underutilization; (2) the traffic is transmitted along an non-optimal path (for example, a non-shortest path), which increases transmission delay; (3) in the STP, a traditional Internet Ethernet packet does not have a time to live (TTL, Time To Live) field, so when a loop occurs due to a communication failure, the broadcast storm problem bandwidth utilization efficiency.

In a customer edge (CE) network, local area networks constituted by hubs and switches and connected through traditional bridges are called local area network links (LAN link). For a TRILL network, these local area network links are called local links. The local links can be connected to different routing bridges (RBridge) to constitute a multi-homing situation. In the TRILL network, a designated RBridge (DRB) appoints a unique appointed forwarder for a virtual local area network (VLAN) in the local link, and only the RBridge appointed as the appointed forwarder are authorized to forward data.

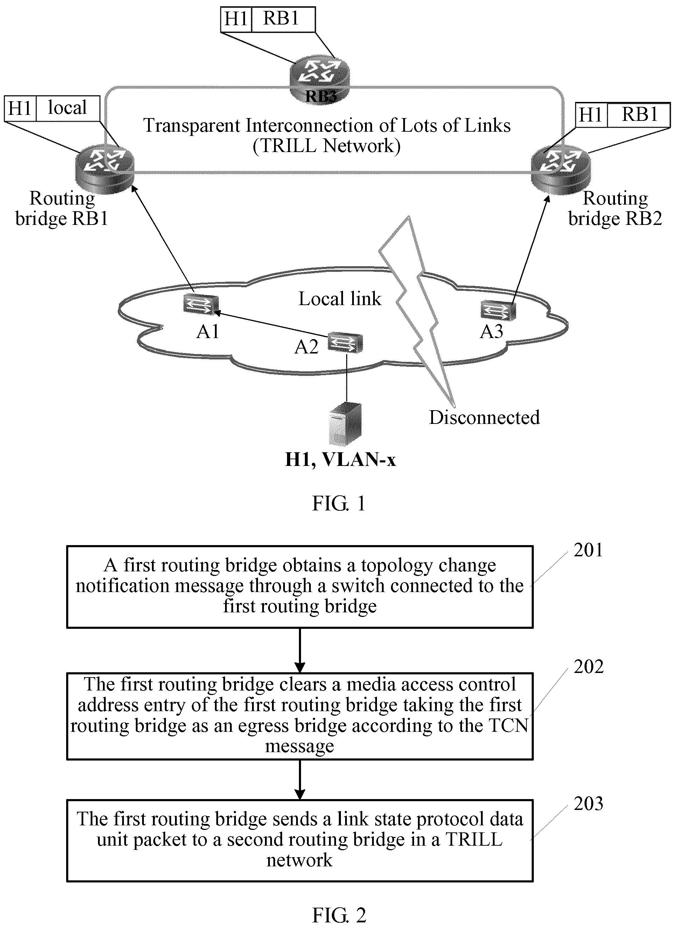

FIG. 1 is a schematic diagram of an architecture of a CE network in the prior art. In a local link of the CE network, three switches are connected, which are a switch A1, a switch A2, and a switch A3, respectively. A VLAN carried by the local link is a VLAN-x, and a host H1 is connected to a switch A2. In the CE network under the multi-homing situation, the switch A1 is connected to a routing bridge RB1, and the switch A3 is connected to a routing bridge RB2. The routing bridge RB1, the routing bridge RB2, and a routing bridge RB3 form a TRILL network. In the TRILL network, the TRILL IS-IS protocol selects a routing bridge as a designated routing bridge for each local area network link, and the routing bridge RB1 is appointed by the designated routing bridge as an appointed forwarder. Therefore, a media access control (MAC,) address entry of the routing bridge RB1 records that the host H1 is locally connected, a MAC address entry of the routing bridge RB2 records that the routing bridge RB1 is connected to the host H1, and a MAC address entry of the routing bridge RB3 records that the routing bridge RB1 is connected to the host H1.

However, has the following defects of the prior art: in the architecture of the CE network shown in FIG. 1, if a network topology of the local link changes, a repeated bootstrap of the host will occur, so the host may switch from connection to the routing bridge RB1 that originally works as the appointed forwarder to connection to a new appointed forwarder (for example, the new appointed forwarder is the routing bridge RB2) in the local link. However, the old appointed forwarder (for example, the routing bridge RB1) cannot perceive the change of the network topology and therefore still saves a MAC address of the host H1 recorded in the MAC address entry of the old appointed forwarder, and other routing bridges in the TRILL network still forward data packets to the old appointed forwarder RB1. Because the old appointed forwarder RB1 is not connected to the host H1 at this time, the data packets forwarded by the other routing bridges are lost, which leads to traffic black holing.

WO 2010/141064 A1 describes a method including receiving, at a processor at a node, notification of an error in a VLAN to topology mapping at the node, receiving a multi-destination packet from the VLAN in the VLAN to topology mapping, the multi-destination packet including a tree identifier associated with one of the topologies, and transmitting the multi-destination packet to all forwarding ports at the node in an unpruned tree corresponding to the tree identifier contained in the multi-destination packet.

US 2008/0031154 A1 describes a method for identifying instability or a loop in a network. In one method, a first BPDU message is received at a switch indicating a topology change. The message includes a bridge identifier identifying a network device originating the first BPDU message. A second BPDU is generated at the switch and includes the bridge identifier identifying the network device originating the first BPDU message. The method further includes transmitting the second BPDU message indicating the topology change from the switch.

### SUMMARY

Embodiments of the present invention provide a method and a device for managing a MAC address entry in a TRILL network, so as to solve a problem of data packet loss in an existing TRILL network and increase a success rate of data packet forwarding in the TRILL network.

According to an aspect of an embodiment of the present invention, a method for managing a MAC address entry in a TRILL network, includes:
obtaining, by a first routing bridge, a topology change notification, TCN, message through a switch connected to the first routing bridge;
clearing, by the first routing bridge according to the TCN message, a MAC address entry of the first routing bridge taking the first routing bridge as an egress bridge;
sending, by the first routing bridge, a link state protocol data unit LSP packet to a second routing bridge in the TRILL network, so as to enable the second routing bridge to clear a MAC address entry of the second routing bridge taking the first routing bridge as an egress bridge, where the second routing bridge and the first routing bridge are located in a same virtual local area network VLAN.

According to another aspect of an embodiment of the present invention, a method for managing a MAC address entry in a TRILL network, includes:
receiving, by a second routing bridge, a link state protocol data unit LSP packet sent by a first routing bridge, where the first routing bridge and the second routing bridge are located in a same virtual local area network, VLAN; and
clearing, by the second routing bridge, a MAC address entry of the second routing bridge taking the first routing bridge as an egress bridge.

According to an aspect of an embodiment of the present invention, a routing bridge includes:
an obtaining unit, configured to obtain a topology change notification TCN message through a switch connected to the routing bridge;
a clearing unit, configured to clear, according to the TCN message, a media access control MAC address entry of the routing bridge taking the routing bridge as an egress bridge; and
a sending unit, configured to send a link state protocol data unit LSP packet to a second routing bridge in a Transparent Interconnection of Lots of Links TRILL network, so as to enable the second routing bridge to clear a MAC address entry of the second routing bridge taking the routing bridge as an egress bridge, where the second routing bridge and the routing bridge are located in a same virtual local area network VLAN.

According to an aspect of an embodiment of the present invention, a routing bridge in a Transparent Interconnection of Lots of Links, TRILL, network, includes:
a receiving unit, configured to receive a link state protocol data unit LSP packet sent by a first routing bridge, where the first routing bridge and the routing bridge are located in a same virtual local area network VLAN; and
a clearing unit, configured to clear a media access control MAC address entry of the routing bridge taking the first routing bridge as an egress bridge.

In the embodiments of the present invention, the first routing bridge first obtains the TCN message through the switch connected to the first routing bridge, clears the MAC address entry of the first routing bridge according to the obtained TCN message, and sends the LSP packet to the second routing bridge in the TRILL network, so that the second routing bridge that is located in a same VLAN as the first routing bridge can clear the MAC address entry taking the first routing bridge as an egress bridge. Because the embodiments of the present invention can clear the old MAC address entries in the routing bridges, other routing bridges in the TRILL network are prevented from forwarding data packets to the old appointed forwarder. As a result, a problem of data packet loss that exists in an existing TRILL network can be solved, and a success rate of data packet forwarding in the TRILL network is increased.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an architecture of a CE network in the prior art;
FIG. 2 is a schematic diagram of a method for managing a MAC address entry in a TRILL network according to an embodiment of the present invention;
FIG. 3 is a schematic diagram of another method for managing a MAC address entry in a TRILL network according to an embodiment of the present invention;
FIG. 4 is a schematic diagram of a TRILL network that solves a traffic black holing problem according to an embodiment of the present invention;
FIG. 5 is a schematic diagram of a routing bridge according to an embodiment of the present invention; and
FIG. 6 is a schematic diagram of another routing bridge according to an embodiment of the present invention.

### DESCRIPTION OF EMBODIMENTS

Embodiments of the present invention provide a method and a device for managing a MAC address entry in a TRILL network, so as to solve a problem of data packet loss in an existing TRILL network and increase a success rate of data packet forwarding in the TRILL network.

To make the objectives, features, and advantages of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides a method for managing a MAC address entry in a TRILL network. In the description about the method, an action is executed by a first routing bridge, which is an appointed forwarder before a network topology of a local link changes. It may be understood that the first routing bridge represents only a type of routing bridge in the TRILL network to be differentiated from another routing bridge (that is, a second routing bridge) that is subsequently involved in the embodiment of the present invention, but is not intended to limit the present invention.

As shown in FIG. 2, a method for managing a MAC address entry in a TRILL network, includes the following steps.

201: A first routing bridge obtains a topology change notification message through a switch connected to the first routing bridge.

In the embodiment of the present invention, the first routing bridge in the TRILL network first obtains the topology change notification (TCN, Topology Change Notification) message through the switch connected to the first routing bridge in a local link. The TCN message is used for notifying the switch that a network topology in the local link changes. However, the TCN message is transmitted only among the switches in the local link, and a routing bridge cannot perceive the change of the network topology in the local link. Therefore, the embodiment of the present invention proposes that the first routing bridge obtains the TCN message through the switch connected to the first routing bridge. In practical application, the first routing bridge obtains the TCN message in a plurality of manners, which are described in the following. One possible implementation is that: the first routing bridge listens to the switch connected to the first routing bridge in the local link, to obtain the TCN message. Another possible implementation is that: the switch in the local link broadcasts the TCN message, and the first routing bridge can receive the TCN message through an interface connected to the switch.

202: The first routing bridge clears, according to the TCN message, a media access control address entry of the first routing bridge taking the first routing bridge as an egress bridge.

In the embodiment of the present invention, after receiving the TCN message, the first routing bridge clears, according to the TCN message, the MAC address entry of the first routing bridge taking the first RBridge as the egress bridge. For example, before the network topology of the local link occurs, the MAC address entry of the first routing bridge e records a host in the local link and a MAC address of the host. After receiving the TCN message, the first routing bridge clears the MAC address entry of the first routing bridge taking the first routing bridge as the egress bridge. After the MAC address entry is cleared, the MAC address entry of the first routing bridge does not record the host that takes the first routing bridge as the egress bridge in the local link and the MAC address of the host.

203: The first routing bridge sends a link state protocol data unit packet to a second routing bridge in the TRILL network, so that the second routing bridge clears a MAC address entry of the second routing bridge taking the first routing bridge as an egress bridge, where the second routing bridge and the first routing bridge are located in a same virtual local area network.

In the embodiment of the present invention, the first routing bridge sends the link state protocol date unit (LSP, Link State Protocol Date Unit) packet to the second routing bridge in the TRILL network. A routing bridge (for example, the second routing bridge) that is located in the same VLAN as the first routing bridge in the TRILL network can receive and process the LSP packet, so that the second routing bridge that receives the LSP packet clears the MAC address entry of the second routing bridge taking the first routing bridge as an egress bridge. However, a routing bridge that is located in a different VLAN from the first routing bridge in the TRILL network cannot process the LSP packet. The second routing bridge refers to one or more of other routing bridges that are located in the same VLAN as the first routing bridge. The first routing bridge may send the LSP packet to the second routing bridge in the TRILL network in a broadcast, multicast, or unicast manner. It should be noted that the first routing bridge and the second routing bridge mentioned in the embodiment of the present invention are only naming methods adopted to differentiate two different routing bridges, but are not intended to limit the routing bridges in terms of time sequence or logic. It may be understood that routing bridge A and routing bridge B may also be adopted as naming methods to differentiate the two routing bridges, which is only limited herein.

It should be noted that there is no sequential order between operation 202 and operation 203. After the first RBridge obtains the TCN message, operation 202 may be executed prior to operation 203, or operation 203 may be executed prior to operation 202, or operation 202 and operation 203 are executed simultaneously, which is not limited herein.

In the embodiment of the present invention, the first routing bridge first obtains the TCN message through the switch connected to the first routing bridge, clears the MAC address entry of the first routing bridge taking the first routing bridge as an egress bridge according to the obtained TCN message, and sends the LSP packet to the second routing bridge in the TRILL network, so that the second routing bridge that is located in the same VLAN as the first routing bridge can clear the MAC address entry taking the first routing bridge as the egress bridge. Because the embodiment of the present invention can clear the old MAC address entries in the routing bridges, other routing bridges in the TRILL network are prevented from forwarding data packets to the old appointed forwarder. As a result, a problem of data packet loss that exists in an existing TRILL network can be solved, and a success rate of data packet forwarding in the TRILL network is increased.

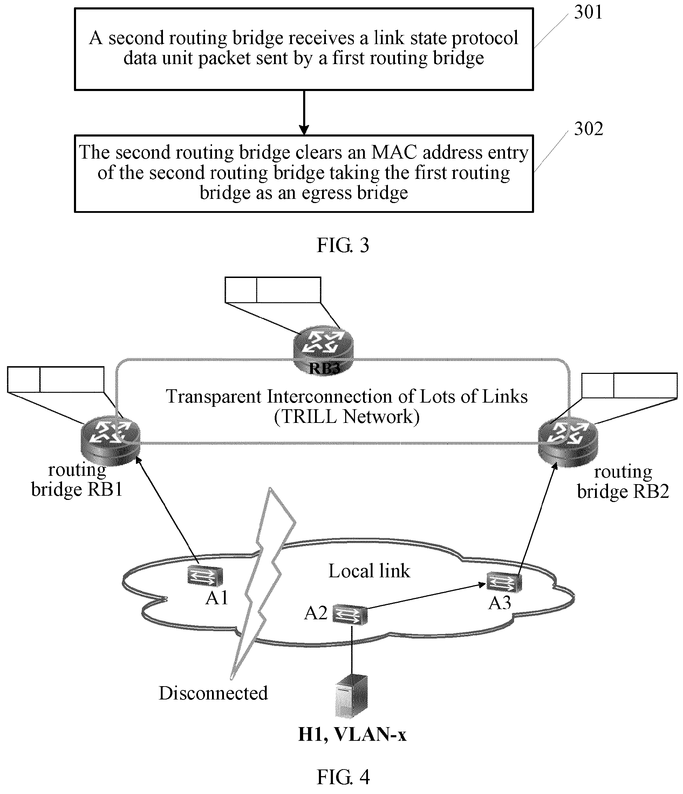

The foregoing embodiment introduces the method for managing the MAC address entry in the TRILL network implemented on a first routing bridge side, and the following introduces a method for managing the MAC address entry in the TRILL network implemented on a second routing bridge side that interacts with the first routing bridge side. Referring to FIG. 3, the method includes the following steps.

301: A second routing bridge receives a link state protocol data unit packet sent by a first routing bridge, where the first routing bridge and the second routing bridge are located in the same virtual local area network.

In the embodiment of the present invention, when a network topology in a local link changes, after obtaining a TCN message, the first routing bridge may send the LSP packet to the second routing bridge in a TRILL network. Because the second routing bridge and the first routing bridge are located in the same VLAN, the second routing bridge may receive the LSP packet sent by the first routing bridge. The second routing bridge refers to one or more of other routing bridges that are located in the same VLAN as the first routing bridge. The first routing bridge may send the LSP packet to the second routing bridge in the TRILL network in a broadcast or multicast, or unicast manner.

302: The second routing bridge clears a MAC address entry of the second routing bridge taking the first routing bridge as an egress bridge.

In the embodiment of the present invention, after receiving the LSP packet sent by the first routing bridge, the second routing bridge in the TRILL network clears the MAC address entry of the second routing bridge taking the first routing bridge as the egress bridge (egress), to prevent the second RBridge from still forwarding a data packet to the old appointed forwarder after the network topology of the local link changes. In this way, loss of the data packet forwarded by the second routing bridge is prevented, and therefore occurrence of traffic black holing is prevented.

In the embodiment of the present invention, after receiving the LSP packet sent by the first routing bridge, the second routing bridge that is located in the same VLAN as the first routing bridge can clear the MAC address entry taking the first routing bridge as the egress bridge. Because the embodiment of the present invention can clear the old MAC address entries in the routing bridges, other routing bridges in the TRILL network are prevented from forwarding data packets to the old appointed forwarder. As a result, a problem of data packet loss that exists in an existing TRILL network can be solved, and a success rate of data packet forwarding in the TRILL network is increased.

In the embodiments introduced with reference to FIG. 2 and FIG. 3, the first routing bridge can clear the MAC address entry of the first routing bridge taking the first routing bridge as the egress bridge, and the second routing bridge can clear the MAC address entry of the second routing bridge taking the first routing bridge as the egress bridge, to prevent the second routing bridge in the TRILL network from still forwarding a data packet to the old appointed forwarder after the network topology of the local link changes. In this way, loss of the data packet forwarded by the second routing bridge is prevented, and therefore occurrence of traffic black holing is prevented. FIG. 4 is a schematic diagram of a TRILL network that solves a traffic black holing problem according to an embodiment of the present invention. In FIG. 4, three switches (a switch A1, a switch A2, and a switch A3) are connected in a local link. A VLAN-x is configured in the local link. A host H1 is connected to the switch A2, the switch A1 is connected to a routing bridge RB1, and the switch A3 is connected to a routing bridge RB2. The routing bridge RB1, the routing bridge RB2, and a routing bridge RB3 form a TRILL network. Before a topology of the TRILL network changes, the RB1 is an appointed forwarder, but after the topology of the TRILL network changes, the RB2 is an appointed forwarder. After operations are performed according to the methods of the embodiments of the present invention shown in FIG. 2 and FIG. 3, in the TRILL network, a MAC address entry of each routing bridge taking the RB1 as an egress bridge is cleared, which prevents the routing bridge RB2 and the routing bridge RB3 in the TRILL network from forwarding data packets to the old appointed forwarder RB1 after the network topology of the local link changes. In this way, loss of the data packets forwarded by the routing bridge RB2 and the routing bridge RB3 is prevented, and therefore occurrence of traffic black holing is prevented. In the embodiment of the present invention, the number of routing bridges that form the TRILL network may be 2 or more than 3, and the number of switches in the local link may also be 2 or more than 3, which are not specifically limited herein.

The foregoing embodiments introduce the methods for managing a MAC address entry in a TRILL network provided in the embodiments of the present invention, and the following introduces a routing bridge in a TRILL network provided in an embodiment of the present invention.

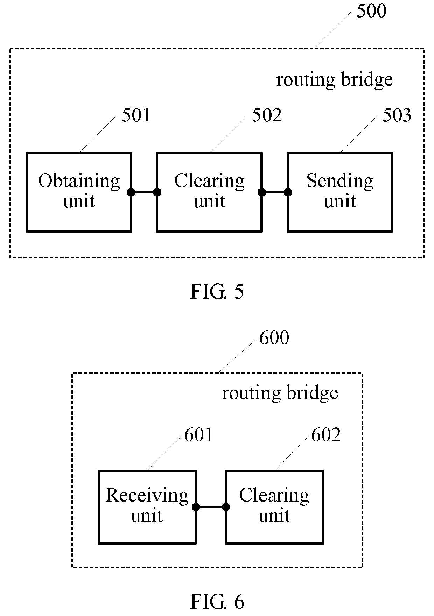

Referring to FIG. 5, a routing bridge 500 provided in an embodiment of the present invention, includes:
an obtaining unit 501, configured to obtain a TCN message through a switch connected to the routing bridge 500;
a clearing unit 502, configured to clear, according to the TCN message, a MAC address entry of the routing bridge 500 taking the routing bridge 500 as an egress bridge; and
a sending unit 503, configured to send an LSP packet to a second routing bridge in a TRILL network, so that the second routing bridge clears a MAC address entry of the second routing bridge taking the routing bridge 500 as the egress bridge, where the second routing bridge and the routing bridge 500 are located in the same VLAN, the second routing bridge refers to one or more of other routing bridge that are located in the same VLAN as the routing bridge 500, and the routing bridge may send the LSP packet to the second RBridge in the TRILL network in a broadcast, multicast, or unicast manner.

It should be noted that the routing bridge 500 provided in the embodiment of the present invention actually refers to the first routing bridge introduced in the foregoing embodiments shown in FIG. 2 and FIG. 3, which is described herein for illustration purpose only. In addition, in the embodiment shown in FIG. 5, when the routing bridge 500 appears, a routing bridge that interacts with the routing bridge 500 is named a second routing bridge, and the second routing bridge is only one of routing bridges that are located in the same TRILL network as the routing bridge 500.

It should be noted that in a specific implementation of the obtaining unit 501 in the embodiment of the present invention, an optional implementation is that the obtaining unit 501 is specifically configured to listen to the switch connected to the routing bridge 500 in the local link to obtain the TCN message.

It should be noted that in the specific implementation of the obtaining unit 501 in the embodiment of the present invention, another optional implementation is that the obtaining unit 501 is specifically configured to receive the TCN message broadcast by the switch connected to the routing bridge 500.

It should be noted that content such as information interaction among the modules/units and execution processes of the device are based on the same idea as the methods in the embodiments of the present invention, so technical effects of the device are the same as the methods in the embodiments of the present invention. For details, reference may be made to descriptions of the method in the embodiment of the present invention shown in FIG. 2, which is not described herein again.

In the embodiment of the present invention, the obtaining unit 501 first obtains the TCN message through the switch connected to the routing bridge 500; the clearing unit 502 clears, according to the obtained TCN message, the MAC address entry of the routing bridge 500 taking the routing bridge 500 as the egress bridge; and the sending unit 503 sends the LSP packet to the second routing bridge in the TRILL network, so that the second routing bridge that is located in the same VLAN as the routing bridge 500 can clear the MAC address entry of the second routing bridge taking the routing bridge 500 as the egress bridge. Because the embodiment of the present invention can clear the old MAC address entries in the routing bridges, other routing bridges in the TRILL network are prevented from forwarding data packets to the old appointed forwarder. As a result, a problem of data packet loss that exists in an existing TRILL network can be solved, and a success rate of data packet forwarding in the TRILL network is increased.

The following introduces another routing bridge in a TRILL network provided in an embodiment of the present invention. Referring to FIG. 6, a routing bridge 600 provided in an embodiment of the present invention, includes:
a receiving unit 601, configured to receive an LSP packet sent by a first routing bridge, where the first routing bridge and the routing bridge 600 are located in the same virtual local area network VLAN; and
a clearing unit 602, configured to clear a MAC address entry of the routing bridge 600 taking the first routing bridge as an egress bridge.

It should be noted that the routing bridge 600 provided in the embodiment of the present invention actually refers to the second routing bridge introduced in the foregoing embodiments shown in FIG. 2 and FIG. 3, which is described herein for illustration purpose only.

It should be noted that content such as information interaction among the modules/units and execution processes of the device are based on the same idea as the methods in the embodiments of the present invention, so technical effects of the device are the same as the methods in the embodiments of the present invention. For details, reference may be made to descriptions of the method in the embodiment of the present invention shown in FIG. 3, which is not described herein again.

In the embodiment of the present invention, the receiving unit 601 in the routing bridge 600 that is located in the same VLAN as the first routing bridge can receive the LSP packet sent by the first routing bridge, and the clearing unit 602 can clear the MAC address entry taking the first routing bridge as the egress bridge. Because the embodiment of the present invention can clear the old MAC address entries in the routing bridges, other routing bridges in the TRILL network are prevented from forwarding data packets to the old appointed forwarder. As a result, a problem of data packet loss that exists in an existing TRILL network can be solved, and a success rate of data packet forwarding in the TRILL network is increased.

A person of ordinary skill in the art may understand that all or a part of the steps of the methods in the foregoing embodiments may be implemented by a program instructing relevant hardware. The program may be stored in a computer readable storage medium. The storage medium may be a read-only memory, a magnetic disk, or an optical disc.

The method and the device for managing the MAC address entry in the TRILL network are described in detail above. For a person of ordinary skill in the art, variations and modifications may be made to the present invention in terms of specific implementations or application scopes according to the ideas of the embodiments of the present invention. Therefore, the specification shall not be construed as limitations to the present invention.

## Claims

1. A method for managing a media access control, MAC, address entry in a Transparent Interconnection of Lots of Links, TRILL, network, comprising:
obtaining (201), by a first routing bridge, a topology change notification, TCN, message through a switch connected to the first routing bridge;
clearing (202), by the first routing bridge according to the TCN message, a MAC address entry of the first routing bridge taking the first routing bridge as an egress bridge; and
sending (203), by the first routing bridge, a link state protocol data unit, LSP, packet to a second routing bridge in the TRILL network.

2. The method according to claim 1, wherein the obtaining (201), by the first routing bridge, the TCN message through the switch connected to the first routing bridge comprises:
listening to, by the first routing bridge, the switch connected to the first routing bridge in a local link to obtain the TCN message.

3. The method according to claim 1, wherein the obtaining, by the first routing bridge, the topology change notification, TCN, message through the switch connected to the first routing bridge comprises:
receiving, by the first routing bridge, the TCN message broadcast by the switch connected to the first routing bridge.

4. The method according to any of claims 1 to 3, the LSP packet is sent in a broadcast, or multicast or unicast manner, by the first routing bridge, to the second routing bridge.

5. The method according to any of claims 1 to 4, wherein the second routing bridge refers to one or more of other routing bridges that are located in the same virtual local area network, VLAN, as the first routing bridge.

6. The method according to any of claims 1 to 5, wherein a routing bridge that is located in a different VLAN from the first routing bridge in the TRILL network cannot process the LSP packet.

7. A method for managing a media access control, MAC, address entry in a Transparent Interconnection of Lots of Links, TRILL, network, comprising:
receiving (301), by a second routing bridge, a link state protocol data unit, LSP, packet sent by a first routing bridge, wherein the first routing bridge and the second routing bridge are located in the same virtual local area network, VLAN; and
clearing (302), by the second routing bridge, a MAC address entry of the second routing bridge taking the first routing bridge as an egress bridge.

8. The method according to claim 7, wherein the second routing bridge refers to one or more of other routing bridges that are located in the same virtual local area network, VLAN, as the first routing bridge.

9. The method according to claim 7 or 8, wherein the LSP packet is sent in a broadcast, or multicast or unicast manner, by the first routing bridge, to the second routing bridge.

10. A routing bridge (500), comprising:
an obtaining unit (501), configured to obtain a topology change notification, TCN, message through a switch connected to the routing bridge (500);
a clearing unit (502), configured to clear, according to the TCN message, a media access control, MAC, address entry of the routing bridge (500) taking the routing bridge (500) as an egress bridge; and
a sending unit (503), configured to send a link state protocol data unit, LSP, packet to a second routing bridge (600) in a Transparent Interconnection of Lots of Links, TRILL, network.

11. The routing bridge according to claim 10, wherein the obtaining unit (501) is specifically configured to listen to the switch connected to the routing bridge (500) in a local link to obtain the TCN message.

12. The routing bridge according to claim 10, wherein the obtaining unit (501) is specifically configured to receive the TCN message broadcast by the switch connected to the routing bridge (500).

13. A routing bridge (600) in a Transparent Interconnection of Lots of Links, TRILL, network, comprising:
a receiving unit (601), configured to receive a link state protocol data unit, LSP, packet sent by a first routing bridge (500), wherein the first routing bridge (500) and the routing bridge (600) are located in the same virtual local area network, VLAN; and
a clearing unit (602), configured to clear a media access control, MAC, address entry of the routing bridge (600) taking the first routing bridge (500) as an egress bridge.

14. The routing bridge (600) according to claim 13, wherein the routing bridge (600) refers to one or more of other routing bridges that are located in the same virtual local area network, VLAN, as the first routing bridge (500).

15. The routing bridge (600) according to claim 13 or 14, wherein the LSP packet is sent in a broadcast, or multicast or unicast manner, by the first routing bridge (500), to the routing bridge (600).

## Patentansprüche

1. Verfahren zur Verwaltung eines "Media Access Control"- bzw. MAC-Adresseneintrags in einem "Transparent Interconnection of Lots of Links"- bzw. TRILL-Netzwerk, mit den folgenden Schritten:
eine erste Routingbrücke erhält (201) eine Topologieänderungsbenachrichtigungs- bzw. TCN-Nachricht mittels eines mit der ersten Routingbrücke verbundenen Switch;
die erste Routingbrücke löscht (202) gemäß der TCN-Nachricht einen MAC-Adresseneintrag der ersten Routingbrücke, wobei die erste Routingbrücke als Ausgangsbrücke genommen wird, und
die erste Routingbrücke sendet (203) ein "Link State Protocol Data Unit"- bzw. LSP-Paket zu einer zweiten Routingbrücke in dem TRILL-Netzwerk.

2. Verfahren nach Anspruch 1, wobei das Erhalten (201) der TCN-Nachricht durch die erste Routingbrücke mittels des mit der ersten Routingbrücke verbundenen Switch Folgendes umfasst:
die erste Routingbrücke hört den mit der ersten Routingbrücke verbundenen Switch in einer lokalen Verbindung an, um die TCN-Nachricht zu erhalten.

3. Verfahren nach Anspruch 1, wobei das Erhalten der Topologieänderungsbenachrichtigungs- bzw. TCN-Nachricht durch die erste Routingbrücke mittels des mit der ersten Routingbrücke verbundenen Switch Folgendes umfasst:
die erste Routingbrücke empfängt die durch den mit der ersten Routingbrücke verbundenen Switch rundgesendete TCN-Nachricht.

4. Verfahren nach einem der Ansprüche 1 bis 3, wobei das LSP-Paket im Rundsende- oder Multicast- oder Unicastverfahren durch die erste Routingbrücke zu der zweiten Routingbrücke gesendet wird.

5. Verfahren nach einem der Ansprüche 1 bis 4, wobei sich die zweite Routingbrücke auf eine oder mehrere anderer Routingbrücken bezieht, die sich in demselben virtuellen lokalen Netzwerk VLAN wie die erste Routingbrücke befinden.

6. Verfahren nach einem der Ansprüche 1 bis 5, wobei eine Routingbrücke, die sich in einem anderen VLAN als die erste Routingbrücke in dem TRILL-Netzwerk befindet, das LSP-Paket nicht verarbeiten kann.

7. Verfahren zur Verwaltung eines "Media Access Control"- bzw. MAC-Adresseneintrags in einem "Transparent Interconnection of Lots of Links"- bzw. TRILL-Netzwerk, mit den folgenden Schritten:
eine zweite Routingbrücke empfängt (301) ein durch eine erste Routingbrücke gesendetes "Link State Protocol Data Unit"- bzw. LSP-Paket, wobei sich die erste Routingbrücke und die zweite Routingbrücke in demselben virtuellen lokalen Netzwerk VLAN befinden; und
die zweite Routingbrücke löscht (302) einen MAC-Adresseneintrag der zweiten Routingbrücke, wobei die erste Routingbrücke als eine Ausgangsbrücke genommen wird.

8. Verfahren nach Anspruch 7, wobei sich die zweite Routingbrücke auf eine oder mehrere anderer Routingbrücken bezieht, die sich in demselben virtuellen lokalen Netzwerk VLAN wie die erste Routingbrücke befinden.

9. Verfahren nach Anspruch 7 oder 8, wobei das LSP-Paket im Rundsende- oder Multicast- oder Unicastverfahren durch die erste Routingbrücke zu der zweiten Routingbrücke gesendet wird.

10. Routingbrücke (500), die Folgendes umfasst:
eine Erhalteeinheit (501), ausgelegt zum Erhalten einer Topologieänderungsbenachrichtigungs- bzw. TCN-Nachricht mittels eines mit der Routingbrücke (500) verbundenen Switch;
eine Löscheinheit (502), ausgelegt zum Löschen eines "Media Access Control"- bzw. MAC-Adresseneintrags der Routingbrücke (500) gemäß der TCN-Nachricht, wobei die Routingbrücke (500) als eine Ausgangsbrücke genommen wird; und
eine Sendeeinheit (503), ausgelegt zum Senden eines "Link State Protocol Data Unit"- bzw. LSP-Pakets zu einer zweiten Routingbrücke (600) in einem "Transparent Interconnection of Lots of Links"- bzw. TRILL-Netzwerk.

11. Routingbrücke nach Anspruch 10, wobei die Erhalteeinheit (501) spezifisch ausgelegt ist zum Anhören des mit der Routingbrücke (500) verbundenen Switch in einer lokalen Verbindung, um die TCN-Nachricht zu erhalten.

12. Routingbrücke nach Anspruch 10, wobei die Erhalteeinheit (501) spezifisch ausgelegt ist zum Empfangen der TCN-Nachricht, die durch den mit der Routingbrücke (500) verbundenen Switch rundgesendet wird.

13. Routingbrücke (600) in einem "Transparent Interconnection of Lots of Links"- bzw. TRILL-Netzwerk, umfassend:
eine Empfangseinheit (601), ausgelegt zum Empfangen eines durch eine erste Routingbrücke (500) gesendeten "Link State Protocol Data Unit"- bzw. LSP-Pakets,
wobei sich die erste Routingbrücke (500) und die Routingbrücke (600) in demselben virtuellen lokalen Netzwerk VLAN befinden; und
eine Löscheinheit (602) ausgelegt zum Löschen eines "Media Access Control"- bzw. MAC-Adresseneintrags der Routingbrücke (600), wobei die erste Routingbrücke (500) als eine Ausgangsbrücke genommen wird.

14. Routingbrücke (600) nach Anspruch 13, wobei sich die Routingbrücke (600) auf eine oder mehrere anderer Routingbrücken bezieht, die sich in demselben virtuellen lokalen Netzwerk VLAN wie die erste Routingbrücke (500) befinden.

15. Routingbrücke (600) nach Anspruch 13 oder 14, wobei das LSP-Paket im Rundsende- oder Multicast- oder Unicastverfahren durch die erste Routingbrücke (500) zu der zweiten Routingbrücke (600) gesendet wird.

## Revendications

1. Procédé de gestion d'une entrée d'adresse de commande d'accès au support, MAC, dans un réseau d'interconnexion transparente de nombreuses liaisons, TRILL, comprenant :
l'obtention (201), par un premier pont de routage, d'un message de notification de changement de topologie, TCN, par le biais d'un commutateur connecté au premier pont de routage ;
la suppression (202), par le premier pont de routage en fonction du message TCN, d'une entrée d'adresse MAC du premier pont de routage en utilisant le premier pont de routage comme pont de sortie ; et
l'envoi (203), par le premier pont de routage, d'un paquet d'unité de données de protocole d'état de liaison, LSP, à un second pont de routage dans le réseau TRILL.

2. Procédé selon la revendication 1, dans lequel l'obtention (201), par le premier pont de routage, du message TCN, par le biais du commutateur connecté au premier pont de routage comprend :
l'écoute, par le premier pont de routage, du commutateur connecté au premier pont de routage dans une liaison locale pour obtenir le message TCN.

3. Procédé selon la revendication 1, dans lequel l'obtention, par le premier pont de routage, du message de notification de changement de topologie, TCN, par le biais du commutateur connecté au premier pont de routage comprend :
la réception, par le premier pont de routage, du message TCN diffusé par le commutateur connecté au premier pont de routage.

4. Procédé selon l'une quelconque des revendications 1 à 3, dans lequel le paquet LSP est envoyé dans une diffusion, ou multidiffusion, ou unidiffusion, par le premier pont de routage, au second pont de routage.

5. Procédé selon l'une quelconque des revendications 1 à 4, dans lequel le second pont de routage se réfère à un ou plusieurs d'autres ponts de routage qui sont situés dans le même réseau local virtuel, VLAN, comme premier pont de routage.

6. Procédé selon l'une quelconque des revendications 1 à 5, dans lequel un pont de routage qui est situé dans un VLAN différent du premier pont de routage dans le réseau TRILL ne peut pas traiter le paquet LSP.

7. Procédé de gestion d'une entrée d'adresse de commande d'accès au support, MAC, dans un réseau d'interconnexion transparente de nombreuses liaisons, TRILL, comprenant :
la réception (301), par un second pont de routage, d'un paquet d'unité de données de protocole d'état de liaison, LSP, envoyé par un premier pont de routage, dans lequel le premier pont de routage et le second pont de routage sont situés dans le même réseau local virtuel, VLAN ; et
la suppression (302), par le second pont de routage, d'une entrée d'adresse MAC du second pont de routage en utilisant le premier pont de routage comme pont de sortie.

8. Procédé selon la revendication 7, dans lequel le second pont de routage se réfère à un ou plusieurs d'autres ponts de routage qui sont situés dans le même réseau local virtuel, VLAN, que le premier pont de routage.

9. Procédé selon la revendication 7 ou 8, dans lequel le paquet LSP est envoyé dans une diffusion, ou multidiffusion, ou unidiffusion, par le premier pont de routage, au second pont de routage.

10. Pont de routage (500), comprenant :
une unité d'obtention (501), configurée pour obtenir un message de notification de changement de topologie, TCN, par le biais d'un commutateur connecté au pont de routage (500) ;
une unité de suppression (502), configurée pour supprimer, en fonction du message TCN, une entrée d'adresse de commande d'accès au support, MAC, du pont de routage (500) en utilisant le pont de routage (500) comme pont de sortie ; et
une unité d'envoi (503), configurée pour envoyer un paquet d'unité de données de protocole d'état de liaison, LSP, à un second pont de routage (600) dans un réseau d'interconnexion transparente de nombreuses liaisons, TRILL.

11. Pont de routage selon la revendication 10, dans lequel l'unité d'obtention (501) est configurée spécifiquement pour écouter le commutateur connecté au pont de routage (500) dans une liaison locale pour obtenir le message TCN.

12. Pont de routage selon la revendication 10, dans lequel l'unité d'obtention (501) est configurée spécifiquement pour recevoir le message TCN diffusé par le commutateur connecté au pont de routage (500).

13. Pont de routage (600) dans un réseau d'interconnexion transparente de nombreuses liaisons, TRILL, comprenant :
une unité de réception (601), configurée pour recevoir un paquet d'unité de données de protocole d'état de liaison, LSP, envoyé par un premier pont de routage (500), dans lequel le premier pont de routage (500) et le pont de routage (600) sont situés dans le même réseau local virtuel, VLAN ; et
une unité de suppression (602), configurée pour supprimer une entrée d'adresse de commande d'accès au support, MAC, du pont de routage (600) en utilisant le premier pont de routage (500) comme pont de sortie.

14. Pont de routage (600) selon la revendication 13, dans lequel le pont de routage (600) se réfère à un ou plusieurs d'autres ponts de routage qui sont situés dans le même réseau local virtuel, VLAN, que le premier pont de routage (500).

15. Pont de routage (600) selon la revendication 13 ou 14, dans lequel le paquet LSP est envoyé dans une diffusion, ou multidiffusion, ou unidiffusion, par le premier pont de routage (500) au pont de routage (600).
